# EUROPÄISCHE PATENTSCHRIFT

(11) **EP 0 510 391 B1**
(45) Veröffentlichungstag und Bekanntmachung des Hinweises auf die Patenterteilung: **08.01.1997**
(21) Anmeldenummer: 92105574.5
(22) Anmeldetag: 01.04.1992
(51) Int. Cl.: C08G 65/44

(54) **Verfahren zur Herstellung von Polyphenylenethern**
Process for the production of polyphenylenethers
Procédé de préparation d'éthers de polyphenylène

(30) Priorität: 25.04.1991 DE 4113493
(43) Veröffentlichungstag der Anmeldung: 28.10.1992
(73) Patentinhaber: BASF Aktiengesellschaft, 67063 Ludwigshafen (DE)
(72) Erfinder: Hedtmann-Rein, Carola, Dr., W-6945 Hirschberg (DE); Huebinger, Wolfgang, Dr., W-6707 Schifferstadt (DE); Zeltner, Doris, Dr., W-6725 Roemerberg (DE); Muehlbach, Klaus, Dr., W-6718 Gruenstadt (DE); Seitz, Friedrich, Dr., W-6701 Friedelsheim (DE); Lotz, Andreas, W-3550 Marburg (DE); Heitz, Walter, Prof. Dr., W-3575 Kirchhain (DE)

(56) Entgegenhaltungen:
- EP-A- 0 061 691
- EP-A- 0 402 721
- DE-A- 2 530 827

## Beschreibung

Die Erfindung betrifft ein verbessertes Verfahren zur Herstellung von Polyphenylenethern aus einwertigen Phenolen, die in den beiden ortho-Stellungen oder zusätzlich in einer meta-Position, nicht aber in para-Stellung Alkylsubstituenten aufweisen durch oxidative Kupplung mit sauerstoffhaltigen Gasen in Gegenwart eines Oxidationskatalysators und einer Verbindung, welche die Reaktion beschleunigt, in organischer Lösung.

Polyphenylenether und deren Verfahren zur Herstellung sind in den US-Patentschriften 3 306 874, 3 306 875 und 3 432 466 offenbart. Abwandlungen des Verfahrens zum Herstellen dieser Polymere sind in den US-Patentschriften 3 384 619, 3 639 656, 3 642 699, 3 661 848 und 3 733 299 beschrieben.

Die für die Herstellung von Polyphenylenethern verwendeten Verfahren basieren vorwiegend auf der Selbstkondensation eines monovalenten Phenols in Anwesenheit eines sauerstoffhaltigen Gases und eines Katalysators.

Anorganische Bromide sind als Beschleuniger für diese Verfahren aus den US-A 3 733 299 und DE-A 27 38 889 bekannt.

Onium-Verbindungen in Kombination mit wasserfreien Reaktionsbedingungen sind aus der US-A 3 365 422 bekannt.

Nachteile dieses Verfahrens sind ein erheblicher Kostenaufwand bei der Prozeßführung, da u.a. die Lösungsmittel entwässert werden müssen.

Aus der DE-A 25 30 827 sind quaternäre Ammoniumsalze als Reaktionsbeschleuniger bekannt, die eine Prozeßdurchführung auch in Anwesenheit einer wäßrigen Phase erlauben.

Bevorzugte Anionen Sind inbesondere Halogenidanionen, wie Bromid und Chlorid, die z.B. mit anorganischen Bromidverbindungen auch eine Reduzierung der benötigten Katalysatorkomplexmenge erzielen sollen.

Katalysatorkomplex und Beschleuniger müssen nach der Herstellung möglichst quantitativ entfernt werden, um die Produktqualität des Polyphenylenethers nicht zu beeinträchtigen. Insofern ist das Verfahren der DE-A 25 30 827 verbesserungswürdig, da zwar weniger Kupfer- und Aminbestandteile entfernt werden müssen, aber gleichzeitig eine weitaus größere Menge an Halogenidionen aus der Reaktionslösung entfernt werden muß.

Der vorliegenden Erfindung lag daher die Aufgabe zugrunde, einen Reaktionsbeschleuniger für die Polyphenylenethersynthese zur Verfügung zu stellen, der in geringen wirksamen Mengen die Reaktion im gewünschten Maße beschleunigt, die benötigte Katalysatorsystemmenge erheblich herabsetzt und darüber hinaus mit geringem Aufwand aus der Reaktionslösung entfernt werden kann.

Demgemäß wurde ein Verfahren zur Herstellung von Polyphenylenethern aus einwertigen Phenolen, die in den beiden ortho-Stellungen oder zusätzlich in in einer meta-Position, nicht aber in para-Stellung Methylsubstituenten aufweisen, gefunden, durch oxidative Kupplung mit sauerstoffhaltigen Gasen in Gegenwart eines Oxidationskatalysators und einer Verbindung, welche die Reaktion beschleunigt, in organischer Lösung, dadurch gekennzeichnet, daß man als Reaktionsbeschleuniger ein quaternäres Ammoniumsalz der allgemeinen Formel I 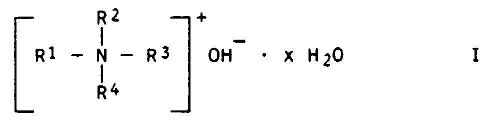 oder Gemische solcher Salze verwendet, in der die Substituenten folgende Bedeutung haben:
- R¹, R², R³, R⁴: gleiche oder verschiedene Alkyl-, Alkenyl oder Aralkylreste mit bis zu 24 C-Atomen und
- x: 0 bis 30, wobei die Mengen an quaternären Ammoniumsalz von 0.1 bis 1.0 Gew.-%, bezogen auf 100 Gew.-% der gesamten Reaktionsmasse betragen.

Die definitionsgemäßen Reste R¹, R², R³ und R⁴ können gleiche oder verschiedene gerad- oder verzweigtkettige ungesättigte oder gesättigte Alkylgruppen, mit bis zu 24, bevorzugt 1 bis 10 C-Atomen sein. Methyl, Ethyl, Propyl, Butyl, Hexyl, Acryl, Decyl, Cetyl und Hexadecyl sowie verzweigte Ketten der genannten Kohlenwasserstoffreste kommen hierfür in Frage, wobei geradkettige Alkylreste wie Methyl, n-Butyl, n-Octyl, n-Nonyl und n-Decyl bevorzugt sind.

Beispiele für Aralkylreste R¹ bis R⁴ sind Benzyl- oder Phenethylreste. Alkenylsubstituenten umfassen geradkettige und verzweigte ungesättigte Kohlenwasserstoffe mit bis zu 24 Kohlenstoffatomen, die ein oder mehrere Doppelbindungen enthalten wie 2-Pentenyl, 3,4-Ditetradecenyl, 3-Hexadecenyl, 6-Eicosenyl, 8-Heineicosenyl und 6-Tricosenyl.

Die quaternären Ammoniumsalze sind allgemein bekannt und im Handel erhältlich. In diesem Zusammenhang sei beispielsweise Bezug genommen auf Kirk-Othmer: Encyl. of Chemical Technology, zweite Ausgabe, Band 16, Seiten 859-865; Arquads, Armour Industrial Co. (1956) und Schwartz, A.M. et al, Surface Active Agents, Band 1, Seiten 156-171 und Interscience Publishers (1949), Band II, Seiten 112-118 (1958).

Das Anion des quaternären Ammoniumsalzes ist definitionsgemäß Hydroxid, welches x = 0 bis 30, Hydratwasser enthalten kann. Bevorzugt ist x = 0 und 30.

Besonders bevorzugte quaternäre Ammoniumsalze I sind Tetra-n-butylammoniumhydroxid bzw. dessen 30 Hydratwasser enthaltene Verbindung sowie Tetraethylammoniumhydroxid und Benzyltrimethylammoniumhydroxid.

Die Verbindungen der allgemeinen Formel I sind in Mengen von 0,1 bis 1,0 und insbesondere von 0,1 bis 0,5 Gew.-%, bezogen auf 100 Gew.-% der gesamten Reaktionsmasse enthalten. Der Reaktionsbeschleuniger kann in fester Form oder in Lösung eingesetzt werden.

Bevorzugt wird das Ammoniumsalz in Lösung eingesetzt. Als Lösungsmittel kommen vorzugsweise Wasser und Alkohole, insbesondere Methanol, 2-Propanol oder deren Mischungen in Betracht.

Zusätzlich hat es sich als vorteilhaft erwiesen, daß der Reaktionsbeschleuniger sowohl mit dem Katalysatorsystem zugegeben als auch mit dem jeweiligen eingesetzten Monomeren vorgelegt werden kann.

Die Molverhältnisse des quaternären Ammoniumsalzes zu Kupfer im Katalysatorkomplex betragen im allgemeinen 0,1:1 bis 15:1, bevorzugt 1:1 bis 10:1 und insbesondere 1:1 bis 5:1.

Die zur Herstellung der Polyphenylenethern verwendeten einwertigen Phenole, die in den beiden ortho-Stellungen oder zusätzlich in einer meta-Position, nicht aber in der para-Stellung Alkylsubstituenten aufweisen, sind übliche Phenole wie 2,6-Dimethylphenol, 2,6-Diethylphenol, 2-Methyl-6-ethylphenol, 2-Methyl-6-propylphenol, 2,6-Dibutylphenol, 2,3,6-Trimethylphenol sowie Gemische dieser Phenole.

Bevorzugt ist hierbei 2,6-Dimethylphenol, das nach den in der Literatur (vgl. Houben-Weyl-Müller, Methoden der organischen Chemie, Phenole, Teil 2, Band 6/1 C, Georg Thieme Verlag, Stuttgart, 1976, S. 1187 ff. und dort zitierte Literatur) beschriebenen Methoden von den bei der Polymerisation störenden Phenolen, wie Phenol, o-Kresol, p-Kresol, m-Kresol und den mehrkernigen Phenolen, wie 2,6-Dimethyl-1-hydroxybiphenyl abgetrennt wird, eingesetzt.

Zur Ausführung der Polykondensation werden üblicherweise sauerstoffhaltige Gase oder Sauerstoff in die 10 bis 60, vorzugsweise 15 bis 50°C warme Lösung des Monomeren in Gegenwart eines Katalysatorkomplexes eingeleitet. Die Sauerstoffdurchflußgeschwindigkeit ist im wesentlichen die gleiche, wie sie in den US-Patentschriften 3 306 874 und 3 306 875 beschrieben ist.

Bei den für die Polykondensation bekannten Oxidationskatalysatoren handelt es sich um ein System aus einer organischen Verbindung und einem Metall, so z.B. Kombinationen aus einem Metall und Alkoholaten, Phenolaten, Amidinen oder Aminen. Vorzugsweise werden Kombinationen aus Aminen und einem Kupfersalz verwendet.

Die primäre, sekundäre oder tertiäre Aminkomponente des Katalysatorkomplexes entspricht denjenigen, die in den vorgenannten Hay-Patenten offenbart sind. Typische Vertreter derselben umfassen aliphatische Amine, in denen die aliphatische Gruppe geradkettige oder verzweigtkettige Kohlenwasserstoffe oder cycloaliphatische Kohlenwasserstoffe darstellen. Bevorzugt sind aliphatische Monoamine. Besonders bevorzugt sind Mono-, Di- und Trialkylamine, wobei die Alkylgruppen 1 bis 12 Kohlenstoffatome aufweisen. Typischerweise können Mono-, Di- und Trimethyl, Äthyl, n-Propyl, i-Propyl, n-butylsubstituierte Amine, Mono- und Dicyclohexylamin, Äthylmethylamin, Morpholin, N-alkyl-cycloaliphatische Amine wie N-Methylcyclohexylamin verwendet werden. Weiterhin können cyclische tertiäre Stickstoffbasen, wie Pyridin, alpha-Collidin, gamma-Picolin und dergleichen benutzt werden.

Mischungen solcher primärer, sekundärer und tertiärer Amine können falls gewünscht ebenfalls Anwendung finden. Ein besonders bevorzugtes Mono-Alkylamin ist n-Butylamin; ein besonders bevorzugtes Dialkylamin ist Di-n-butylamin; und ein besonders bevorzugtes Trialkylamin ist Triäthylamin. Bevorzugte cyclische tertiäre Stickstoffbasen sind Pyridin und 4-Dimethylaminopyridin. Die Konzentration des primären und sekundären Amins in der Reaktionsmischung kann innerhalb weiter Grenzen variieren. Bevorzugt werden jedoch niedrige Konzentrationen. Ein bevorzugter Bereich umfaßt etwa 1 bis 30 Mol pro 100 Mol des monovalenten Phenols. Im Fall eines tertiären Amins ist der bevorzugte Bereich höher und umfaßt von etwa 4 bis etwa 100 Mol pro 100 Mol des monovalenten Phenols.

Typische Beispiele der Kupfer-I-Salze und der Kupfer-II-Salze, die für das Verfahren geeignet sind, finden sich in den vorgenannten Hay-Patenten. Dieselben umfassen Kupfer-I-Chlorid, Kupfer-I-Bromid, Kupfer-I-Sulfat, Kupfer-I-Azid, Kupfer-I-Tetraminsulfat, Kupfer-I-Azetat, Kupfer-I-Butyrat, Kupfer-I-Toluat, Kupfer-II-Chlorid, Kupfer-II-Bromid, Kupfer-II-Sulfat, Kupfer-II-Azid, Kupfer-II-Tetraminsulfat, Kupfer-II-Azetat, Kupfer-II-Butyrat, Kupfer-II-Toluat und dergleichen. Bevorzugte Kupfer-I- und Kupfer-II-Salze sind die Halogenide, Alkanoate oder Sulfate, z.B. Kupfer-I-Bromid und Kupfer-I-Chlorid, Kupfer-II-Bromid und Kupfer-II-Chlorid, Kupfer-II-Fluorid und Kupfer-II-Azetat. Mit primären und sekundären Aminen wird die Konzentration der Kupfersalze wünschenswerterweise niedrig gehalten und sie variiert vorzugsweise von etwa 0,1 bis 1,5 Mol per 100 Mol monovalentes Phenol. Mit tertiären Aminen wird das Kupfersalz vorzugsweise in einer Menge von etwa 1 bis etwa 5 Mol pro 100 Mol des einwertigen Phenols verwendet.

Der Anteil des Lösungsmittels liegt üblicherweise im Bereich 1:1 bis 20:1, d.h. maximal bis zu einem Überschuß des 20-fachen an Lösungsmittel, bezogen auf das Monomere. Geeignete Lösungsmittel sind C₇-C₁₀-Kohlenwasserstoffe wie Ethylbenzol, Xylol, Diethylbenzol oder deren Gemische, wobei vorzugsweise Ethylbenzol oder Toluol verwendet werden. Die Lösungsmittel werden bevorzugt im Bereich von 1:1 bis 10:1 Gew.-Teile, bezogen auf das monomere Phenol eingesetzt.

Falls erwünscht, kann der Reaktionsmischung ein Aktivator wie Diarylguanidin oder Diarylformamidin (s. US-PS 3 544 515) zugegeben werden.

Die Polykondensation kann sowohl kontinuierlich als auch diskontinuierlich durchgeführt werden.

Die Polykondensationsreaktion wird insbesondere bei Temperaturen zwischen 15 und 35°C durchgeführt. Hierzu wird der Sauerstoff in die Lösung des Monomeren eingeleitet, wobei Oxidationskatalysator und der Reaktionsbeschleuniger in Lösung innerhalb eines Zeitraumes von 0,1 bis 1,5 Stunden, vorzugsweise von 0,1 bis 0,5 Stunden zudosiert werden können. Bei einer besonders bevorzugten Ausführungsform des erfindungsgemäßen Verfahrens wird der Katalysator in Lösung vorgelegt und die entsprechende Menge Monomer sowie der Reaktionsbeschleuniger I während der Sauerstoffbegasung zudosiert.

Wenn das gewünschte Molekulargewicht des Polymeren erreicht ist, enthält die Reaktionslösung 1 bis 30 Gew.-% Polyphenylenether, 0,005 bis 1,5 Gew.-% Metallionen und etwa 0,1 bis 6,0 Gew.-% Amin sowie gegebenenfalls geringe Mengen anderer Materialien. Diese Reaktionslösungen werden mit komplexbildenden Verbindungen, wie z.B. den Natriumsalzen der Ethylendiamintetraessigsäure, der Nitrilotriessigsäure oder anderer Aminocarbonsäuren zur Abtrennung des im Polymeren enthaltenen Metallkatalysators behandelt. Die Art und Weise der Zugabe der Komplexierungsmittel ist dabei unkritisch. So können die komplexbildenden Verbindungen in Substanz ebenso wie in wäßriger Lösung in Form ihrer Alkali- oder Erdalkalisalze hinzugegeben werden. Die Zugabe kann auf einmal oder in mehreren Anteilen, kontinuierlich oder diskontinuierlich, mit und ohne zusätzliches Wasser erfolgen. Die Abtrennung der Metallkomponente kann dabei in geeigneten Verfahrensvorrichtungen, z.B. in Filterpressen, in Dekantationstanks, Schälzentrifugen, Extraktionskolonnen, Mixern oder Settlerkaskaden vorgenommen werden.

Der Reaktionsbeschleuniger I wird üblicherweise nach den obigen Methoden der Katalysatorabtrennung mitentfernt, wobei der nach dem erfindungsgemäßen Verfahren hergestellte Polyphenylenether keine nennenswerte Gehalte an Metallkationen mehr aufweist.

Die Kontaktzeit des komplexbildenden Agens mit der Polyphenylenether-Phase kann innerhalb weiter Grenzen variieren. Bevorzugt werden Reaktionszeiten von 1 Minute bis 5 Stunden. Häufig genügen Reaktionszeiten von 5 bis 30 Minuten. Die bevorzugte Reaktionstemperatur liegt zwischen 25 und 80°C, es sind jedoch auch Temperaturbereiche darunter und darüber anwendbar.

Die Abtrennung der Metallkatalysatoren bis zur vollständigen Entfernung aus dem Polyphenylenether-Polymeren kann durch mehrfache Zugabe der komplexbildenden Verbindung und anschließende Abtrennung der resultierenden Metallkomplexe gemäß der bereits beschriebenen Verfahren erfolgen. Bevorzugt wird jedoch eine Ausführungsform der Erfindung, wonach die gesamte Katalysatormenge sowie Reaktionsbeschleunigermenge in einem Komplexier- und Separierschritt aus dem Polymeren entfernt wird.

Nach der Entfernung der metallischen Komponenten als Komplex kann der Polyphenylenether aus der Lösung nach den in den eingangs erwähnten US-Patentschriften beschriebenen Verfahren isoliert werden. Die Isolierung des Polyphenylenethers ist für die vorliegende Erfindung nicht kritisch. So kann z.B. der Polyphenylenether durch Ausfällen aus einer Reaktionslösung mittels einem Antilösungsmittel, wie beispielsweise einem Überschuß von einem Alkohol, z.B. Methanol, isoliert werden. Das filtrierte Produkt kann im Alkohol aufgeschlämmt und - falls gewünscht - mit einem Entfärbungsmittel gerührt und anschließend abfiltriert werden und im Anschluß nach herkömmlichen Verfahren in Filme, Fasern, ausgeformte Gegenstände verarbeitet werden. Andere Alkohole wie Isopropanol, Propanol oder Ethanol können ebenfalls verwendet werden.

Die Aminkomponente des Katalysators kann durch Destillation oder nach anderen herkömmlichen Verfahren zurückgewonnen werden.

Die nach dem erfindungsgemäßen Verfahren hergestellten Polyphenylenether sind für alle Zwecke brauchbar, die in den vorgenannten Hay-Patenten aufgeführt sind. Beispielsweise können sie für ausgeformte Gegenstände oder für Filme, Bänder und dergleichen Anwendung finden. Sie können mit anderen Harzen oder verschiedenartigen Füllstoffen, Verstärkungsmitteln, Farbstoffen, Pigmenten, Stabilisatoren, Weichmachern und dergleichen gemischt werden.

Nach dem erfindungsgemäßen Verfahren werden hochmolekulare Polyphenylenether in verkürzten Reaktionszeiten erhalten. Außerdem hat das erfindungsgemäße Verfahren den Vorteil, daß wesentlich geringe Katalysatormengen bei gleicher Effektivität erforderlich sind.

### Beispiele

### Beispiele 1 bis 5

In einem 250 ml Kolben wurden 0,055 g (0,55 mmol) Kupfer-(I)-chlorid und x ml Di-n-butylamin in 50 ml Toluol unter sauerstoffreien Bedingungen vorgelegt.

5 g (41 mmol) 2,6-Dimethylphenol in 50 ml Toluol und y ml einer 1 molaren Lösung von Tetra-n-butylammoniumhydroxid wurden mit beginnender Sauerstoffeinleitung zugegeben, wobei die Reaktionslösung intensiv durchmischt wurde.

Die Sauerstoffmenge betrug 6,6 l/h bei einer Reaktionstemperatur von 18°C.

Die Gesamtbegasungszeit betrug 1 Stunde. Nach beendeter Polykondensation wurde die Reaktion mit 10 ml einer 20 %igen EDTA-Lösung abgebrochen und zweimal mit geringen Mengen EDTA-Lösung, 5 %iger Salzsäurelösung sowie 5 %iger NaHCO₃-Lösung bis zur neutralen pH-Einstellung extrahiert.

Anschließend wurde das Polymer in 600 ml Methanol gefällt, abgetrennt und im Vakuum bei Raumtemperatur getrocknet.

Die inhärente Viskosität wurde nach DIN 51 562 bei 25°C in Toluol (1 gew.-%ige Lösung) mit einem Ubbelohde-Viskosimeter bestimmt.

### Beispiele 6 und 7

Die Ausführung erfolgte gemäß der Verfahrensweise in den Beispielen 1 bis 5, jedoch wurde als Aminkomponente des Katalysators 4-Dimethylaminopyridin verwendet.

Die Mengenangaben in der Tabelle wurden auf 1 mol Kupfer berechnet. Die in Klammern angegebenen Mengen beziehen sich auf die eingesetzten Mengen in den Beispielen.

Die Beispiele zeigen, daß bereits sehr niedrige Katalysatorkomplexmengen, insbesondere sehr geringe Aminkonzentrationen, bei gleicher Reaktionsdauer höhermolekulare Polphenylenethern erzielen.

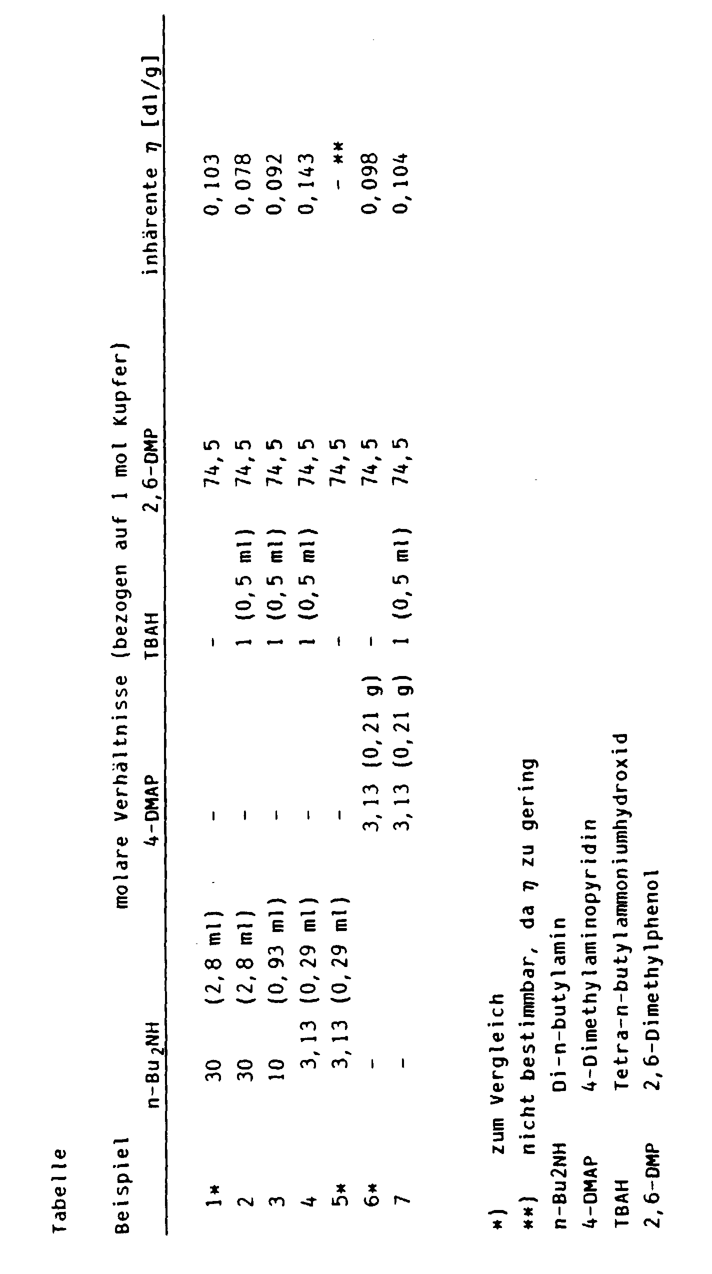

## Patentansprüche

1. Verfahren zur Herstellung von Polyphenylenethern aus einwertigen Phenolen, die in den beiden ortho-Stellungen oder zusätzlich in einer meta-Position, nicht aber in para-Stellung Alkylsubstituenten aufweisen durch oxidative Kupplung mit sauerstoffhaltigen Gasen in Gegenwart eines Oxidationskatalysator und einer verbindung, welche die Reaktion beschleunigt, in organischer Lösung, dadurch gekennzeichnet, daß man als Reaktionsbeschleuniger ein quaternäres Ammoniumsalz der allgemeinen Formel I 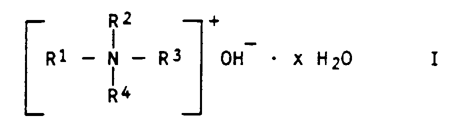 oder Gemische solcher Salze verwendet, in der die Substituenten folgende Bedeutung haben:
R¹, R², R³, R⁴ gleiche oder verschiedene Alkyl-, Alkenyl oder Aralkylreste mit bis zu 24 C-Atomen und
x 0 bis 30, wobei die Mengen an quaternären Ammoniumsalz von 0,1 bis 1,0 gew.-%, bezogen auf 100 gew.-% der gesamten Reaktionsmasse betragen.

2. Verfahren nach Anspruch 1, dadurch gekennzeichnet, daß R¹, R², R³ und R⁴ für gleiche oder verschiedene Alkylreste mit bis 24 C-Atomen stehen.

3. Verfahren nach den Ansprüchen 1 bis 2, dadurch gekennzeichnet, daß das quaternäre Ammoniumsalz Tetra-n-butylammoniumhydroxid ist.

4. Verfahren nach den Ansprüchen 1 bis 3, dadurch gekennzeichnet, daß das quaternäre Ammoniumsalz Tetra-n-butylammoniumhydroxid · 30 H₂O ist.

5. Verfahren nach den Ansprüchen 1 bis 5, dadurch gekennzeichnet, daß das Molverhältnis des quaternären Ammoniumsalzes zu Kupfer im Katalysatorkomplex 0,1:1 bis 15:1 beträgt.

## Claims

1. A process for preparing polyphenylene ethers from monohydric phenols with alkyl substitution in the two ortho positions or additionally in one meta position but not in para position by oxidative coupling in organic solution with oxygen-containing gases in the presence of an oxidation catalyst and of a compound which accelerates the reaction, characterized in that the reaction accelerant used is a quaternary ammonium salt of the general formula I 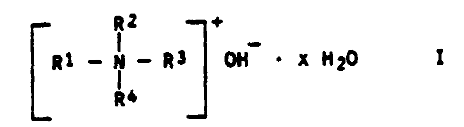 where
R¹, R², R³ and R⁴ are identical or different alkyl, alkenyl or aralkyl radicals having up to 24 carbon atoms and
X is from 0 to 30, or mixtures of such salts, the amount of quaternary ammonium salt being from 0.1 to 1.0% by weight, based on 100% by weight of the total reaction mass.

2. A process as claimed in claim 1, characterized in that R¹, R², R³ and R⁴ are identical or different alkyl radicals having up to 24 carbon atoms.

3. A process as claimed in claims 1 to 2, characterized in that the quaternary ammonium salt is tetra-n-butylammonium hydroxide.

4. A process as claimed in claims 1 to 3, characterized in that the quaternary ammonium salt is tetra-n-butylammonium hydroxide × 30H₂O.

5. A process as claimed in claims 1 to 4, characterized in that the molar ratio of the quaternary ammonium salt to copper in the catalyst complex is from 0.1:1 to 15:1.

## Revendications

1. Procédé de préparation d'éthers de polyphénylène à partir de phénols monovalents, qui présentent des substituants alkyles dans les deux positions ortho ou en outre dans une position méta, mais non en position para, par couplage oxydatif avec des gaz contenant de l'oxygène, en présence d'un catalyseur d'oxydation et d'un composé qui accélère la réaction, en solution organique, caractérisé en ce qu'on utilise à titre d'accélérateur de réaction un sel d'ammonium quaternaire répondant à la Formule I générale 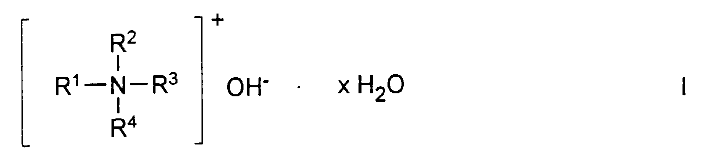 ou des mélanges de ces sels, dans laquelle les substituants présentent la signification suivante :
R¹, R², R³, R⁴ représentent des résidus identiques ou différents d'alkyle, d'alcényle ou d'arylalkyle avec jusqu'à 24 atomes de carbone et
x vaut 0 à 30, les quantités en sel d'ammonium quaternaire s'élevant de 0,1 à 1,0 % en poids, par rapport à 100 % en poids de la masse de réaction totale.

2. Procédé selon la revendication 1, caractérisé en ce que R¹, R², R³ et R⁴ représentent des résidus identiques ou différents d'alkyle avec jusqu'à 24 atomes de carbone.

3. Procédé selon les revendications 1 à 2, caractérisé en ce que le sel d'ammonium quaternaire est l'hydroxyde de tétra-n-butylammonium.

4. Procédé selon les revendications 1 à 3, caractérisé en ce que le sel d'ammonium quaternaire est l'hydroxyde de tétra-n-butylammonium · 30 H₂O.

5. Procédé selon les revendications 1 à 4, caractérisé en ce que le rapport molaire du sel d'ammonium quaternaire au cuivre dans le complexe de catalyseur vaut 0,1 : 1 à 15 : 1 .
